# EUROPEAN PATENT SPECIFICATION

(11) **EP 4 056 385 B1**
(45) Date of publication and mention of the grant of the patent: **07.08.2024**
(21) Application number: 22159346.0
(22) Date of filing: 01.03.2022
(51) Int. Cl.: B60C 11/00, B60C 11/03, B60C 11/12, B60C 11/13

(54) **PNEUMATIC TIRE**
LUFTREIFEN
PNEUMATIQUE

(30) Priority: 08.03.2021 JP 2021036576
(43) Date of publication of application: 14.09.2022
(73) Proprietor: Sumitomo Rubber Industries, Ltd., Kobe-shi, Hyogo-ken 651-0072 (JP)
(72) Inventor: ITO, Sho, Kobe-shi, 651-0072 (JP)
(74) Representative: Manitz Finsterwald Patent- und Rechtsanwaltspartnerschaft mbB

(56) References cited:
- EP-A1- 3 047 984
- EP-A2- 1 795 372
- FR-A1- 3 045 492
- FR-A1- 3 099 085
- US-A1- 2017 129 288
- US-A1- 2019 152 268

## Description

### BACKGROUND OF THE INVENTION

### FIELD OF THE INVENTION

The present invention relates to a pneumatic tire.

### BACKGROUND ART

Conventionally, in order to improve ride comfort performance of tires, it has been adopted to reduce the rigidity of the tread portion. Specifically, a method of lowering the block rigidity of the tread portion and/or softening the tread rubber has been proposed (see, for example, Patent Document 1 below). Thereby, the tread portion can relax forces received from the road surface, and as a result, the ride comfort performance of the tire can be improved.

Patent Document 1: Japanese Patent Application Publication No. 2020-168946

A pneumatic tire in accordance with the preamble of claim 1 is known from EP 3 047 984 A1. Related tires are known from US 2017/129288 A1, FR 3 045 492 A1, EP 1 795 372 A2, FR 3 099 085 A1 and US 2019/152268 A1.

### SUMMARY OF THE INVENTION

### PROBLEMS TO BE SOLVED BY THE INVENTION

When the above-mentioned method is adopted, however, there is a tendency that the rigidity of the tread portion is reduced over the entire ground contacting area. Thus, there is a problem such that the braking performance is deteriorated. In the case of pneumatic tires mounted on self-driving cars, their braking performance is particularly important.

In view of the above problems, the present invention was made, and an object of the present invention is to provide a pneumatic tire capable of improving the ride comfort while suppressing deterioration of the braking performance.

### MEANS FOR SOLVING THE PROBLEMS

According to the present invention, a pneumatic tire comprises a tread portion comprising a tread rubber having a rubber hardness of less than 60 degrees, wherein the rubber hardness is measured at 23 degrees C in accordance with the Japanese Industrial Standard (JIS) K 6253, and wherein
the tread portion comprises:
   a pair of shoulder circumferential grooves extending in the tire circumferential direction;
   a pair of shoulder land portions defined as being located axially outside the respective shoulder circumferential grooves; and
   one or more crown land portions defined as being located between the shoulder circumferential grooves,
each of the shoulder land portions is circumferentially divided into a plurality of shoulder blocks by a plurality of shoulder lateral-groove-like tread-pattern elements having a depth of not less than 50% of the depths of the shoulder circumferential grooves, and
at least one of the crown land regions is circumferentially divided into a plurality of crown blocks by a plurality of crown lateral-groove-like tread-pattern elements having a depth of not less than 50% of the depths of the shoulder circumferential grooves, wherein a shoulder lateral-groove-like tread-pattern element is a groove, a sipe, or a composite of a groove and a sipe which extends across the entire axial width of the shoulder land region and a crown lateral-groove-like tread-pattern element is a groove, a sipe, or a composite of a groove and a sipe which extends across the entire axial width of the crown land region, wherein
when a block area per unit depth of a block is defined as a ground contact area of the block divided by a maximum depth of lateral-groove-like tread-pattern elements which divide the block, the block area per unit depth of each of the shoulder blocks is smaller than the block area per unit depth of each of the crown blocks, wherein the maximum depth of lateral-groove-like tread-pattern elements is measured under a normal state of the tire in which the tire is mounted on a regular rim and is inflated to a normal internal pressure and loaded with no tire load, and the ground contact area of the block is measured when the tire under the normal state is contacted with a flat horizontal surface at a camber angle of zero degree and loaded with the normal tire load, wherein the shoulder lateral-groove-like tread-pattern elements are chamfered, and wherein the width and the depth of the chamfer of the shoulder lateral-groove-like tread-pattern elements are in a range from 2 to 5 mm.

According to an embodiment of the invention, the block area per unit depth of each of the crown blocks is in the range of 17 to 80 (sq.mm/mm).

According to an embodiment of the invention, the pneumatic tire is a non-studless tire, that is, a summer tire.

According to an embodiment of the invention, the shoulder circumferential grooves are located within a region which has a width of 70% of the tread width and is centered on the tire equator.

According to an embodiment of the invention, the crown lateral-groove-like tread-pattern elements are chamfered.

According to an embodiment of the invention, the shoulder lateral-groove-like tread-pattern elements have a depth smaller than the depth of the shoulder circumferential grooves.

According to an embodiment of the invention, the crown lateral-groove-like tread-pattern elements have a depth smaller than the depth of the shoulder circumferential grooves.

According to an embodiment of the invention, the shoulder lateral-groove-like tread-pattern elements have a depth equal to or greater than the depth of the shoulder circumferential grooves.

According to an embodiment of the invention, the crown lateral-groove-like tread-pattern elements have a depth equal to or greater than the depth of the shoulder circumferential grooves.

According to an embodiment of the invention, the shoulder lateral-groove-like tread-pattern element is a shoulder sipe, and the crown lateral-groove-like tread-pattern elements is a crown lateral groove.

### EFFECTS OF THE INVENTION

By adopting the above configurations, the pneumatic tire of the present invention can improve the ride comfort performance while suppressing the deterioration of the braking performance.

### BRIEF DESCRIPTION OF THE DRAWINGS

FIG. 1 is a cross-sectional view of a pneumatic tire as an embodiment of the present invention.
FIG. 2 is a developed partial view of a tread portion of the pneumatic tire.
FIG. 3 is a cross-sectional view taken along line III-III of FIG. 2.
FIG. 4 is a cross-sectional view showing another example of a shoulder sipe.
FIG. 5 is a cross-sectional view taken along line V-V of FIG. 2.

### DETAILED DESCRIPTION OF THE INVENTION

Hereinafter, embodiments of the present invention will be described in detail in conjunction with accompanying drawings.

It should be noted that, in the present specification, throughout the embodiments, the same or common elements or components are referred to by the same reference number, and their detailed description is not repeated.

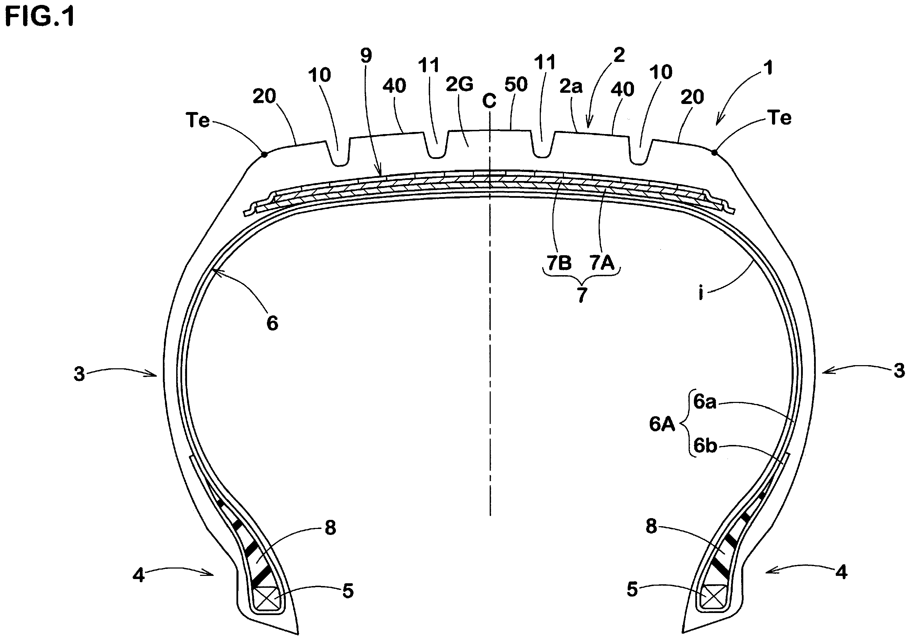

FIG. 1 is a cross-sectional view of a pneumatic tire 1 as an embodiment of the present invention. In FIG. 1, the tire 1 is under its normal state.

In the present specification, the "normal state" means a state in which the tire 1 is mounted on a regular rim (not shown) and is inflated to a normal internal pressure but loaded with no tire load.

In the present specification, dimensions, positions and the like relating to the tire mean those under the normal state unless otherwise noted.

In the present specification, the "regular rim" is a wheel rim specified for the tire by a standard included in a standardization system on which the tire is based, for example, the "normal wheel rim" in JATMA, "Design Rim" in TRA, and "Measuring Rim" in ETRTO.

In the present specification, the "normal internal pressure" is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

As shown in FIG. 1, the tire 1 comprises a tread portion 2, a pair of sidewall portions 3, a pair of bead portions 4 each with a bead core 5 embedded therein, and an inner liner made of air-impermeable rubber disposed along the inner surface of the tire to face the tire cavity.

The present invention can be suitably applied to a tire for a vehicle such as a minivan, an SUV, a commercial vehicle and the like on which a relatively large load acts during running. Specifically, the tire 1 of the present embodiment of the invention is designed to be suitable as a tire for a light truck (LT) or a tire for commercial vehicles belonging to the light truck (C type) in ETRTO.

Further, the tire 1 comprises a carcass 6 extending between the bead cores 5, and a belt 7 disposed radially outside the carcass 6 in the tread portion.

In the present embodiment of the invention, the carcass 6 comprises, for example, at least one carcass ply 6A of carcass cords rubberized with a topping rubber.
The carcass cords are arranged at angles of from 80 to 90 degrees with respect to the tire equator C to have a radial carcass ply structure in this example. As the carcass cords, for example, organic fiber cords are preferably employed.

The carcass ply 6A comprises, for example, a main portion 6a extending between the bead cores 5, and a pair of turned-up portions 6b folded around the respective bead cores 5 from the inside to the outside in the tire axial direction.

Preferably, each of the bead portions 4 is provided, between the main portion 6a and the turned-up portion 6b of the carcass ply 6A, with a bead apex 8 made of hard rubber and extending radially outwardly from the bead core 5.

The belt 7 is composed of a plurality of belt plies, in this embodiment of the invention, only two belt plies 7A and 7B. Each of the belt plies 7A and 7B comprises steel cords arranged at an angle of, for example, 15-40 degrees with respect to the tire equator C. Such belt 7 hoops the carcass 6 to increase the stiffness of the tread portion 2. An additional band 9 may be disposed on the radially outer side of the belt 7. The band 9 comprises an organic fiber cord or cords arranged at an angle of not more than 5 degrees with respect to the tire circumferential direction. The band 9 is effective for improving the high-speed durability of the tire 1 while suppressing the deterioration of the ride comfort.

In the tread portion 2, the tread rubber 2G is disposed on the radially outer side of the belt 7.
The tread rubber 2G forms a ground contacting surface 2a of the tire when the tire under the normal state is contacted with a flat horizontal surface and loaded with a normal tire load. The tread rubber 2G extends from one of tread edges Te to the other of the tread edges Te at least.

In the present specification, the "normal tire load" is a tire load specified for the tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

In the present specification, the "tread edges" of the tread portion 2 are the axially outermost positions of the ground contacting surface 2a when the tire under the normal state is contacted with a flat horizontal surface at a camber angle of zero degree and loaded with the normal tire load.

In the present embodiment of the invention, the tread rubber 2G has a rubber hardness of less than 60 degrees.

In the present specification, the rubber hardness is measured, using a sample which is cut out from the tread rubber 2G forming the ground contacting surface 2a so that the thickness direction of the sample coincides with the tire radial direction, and then, in accordance with the Japanese Industrial Standard (JIS) K 6253, the rubber hardness is measured at 23 degrees C by pressing a type A durometer to the sample from its ground contacting surface 2a side.

The tread rubber 2G having a rubber hardness of less than 60 degrees can relax the input from the road surface during running to reduce the vibration transmission to the wheel rim, and improves the ride comfort performance of the tire 1.
On the other hand, when the rubber hardness of the tread rubber 2G is 60 degrees or more, the rigidity of the tread portion 2 is increased, and the braking performance is improved, but the ride comfort performance is deteriorated.

Thus, in order to further improve the ride comfort performance of the tire 1, the rubber hardness of the tread rubber 2G is preferably not more than 58 degrees, more preferably not more than 55 degrees.

On the other hand, if the rubber hardness of the tread rubber 2G becomes excessively low, the braking performance may be deteriorated. From such a viewpoint, the rubber hardness of the tread rubber 2G may be preferably set to be not less than 45 degrees, more preferably not less than 50 degrees.

In the tread portion 2, rubber having a rubber hardness of 60 degrees or more may be used for a portion other than the ground contacting surface 2a.

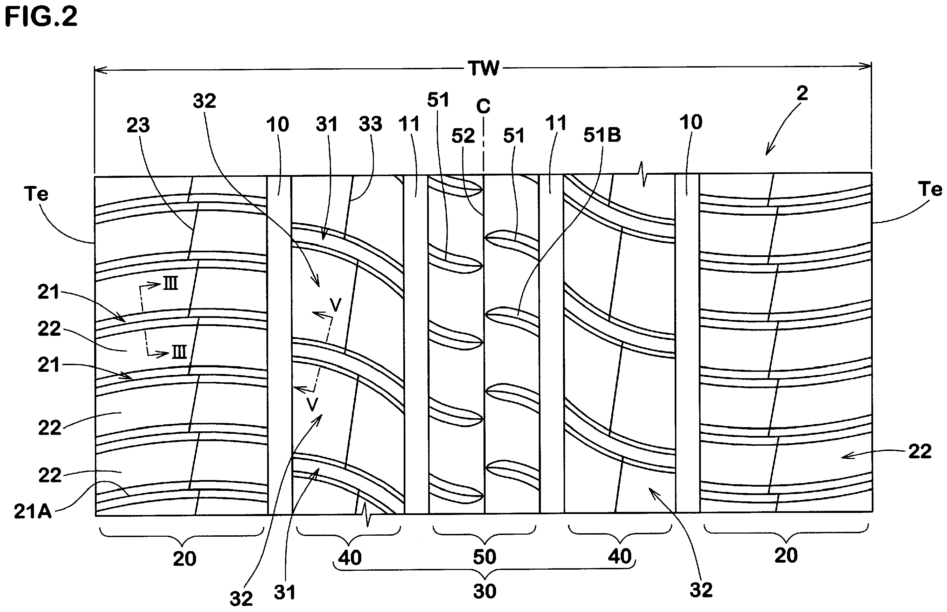

FIG. 2 is a developed partial view of the tread portion 2 of the tire 1 in the present embodiment of the invention.
As shown, the tread portion 2 is provided with a pair of shoulder circumferential grooves 10 extending continuously in the tire circumferential direction, and
the tread portion 2 comprises a pair of shoulder land regions 20 defined between the shoulder circumferential grooves 10 and the tread edges Tw. Between the shoulder land regions 20, one or more crown land regions 30 are provided.

In the present embodiment of the invention, the tread portion 2 is further provided, between the shoulder circumferential grooves 10, with one or more crown circumferential grooves 11. In this embodiment of the invention, two crown circumferential grooves 11 are provided. Thus, the crown land regions 30 include
a pair of first crown land regions 40 between the crown circumferential grooves 11 and the shoulder circumferential grooves 10, and a second crown land region 50 between the crown circumferential grooves 11. In this embodiment of the invention, the second crown land region 50 is disposed on the tire equator C.

In this specification, the term "groove" means a void or recess in the tread surface which has a width large enough for avoiding the closure of the opening of the groove (that is, the opposed groove walls do not contact with each other), when the tire 1 contacts with the ground (flat surface) under the normal tire load, and the groove comes into the ground contacting patch as the tire rotates.

In this embodiment of the invention, the tire 1 is provided with essential drainage performance by the circumferential grooves 10 and 11.

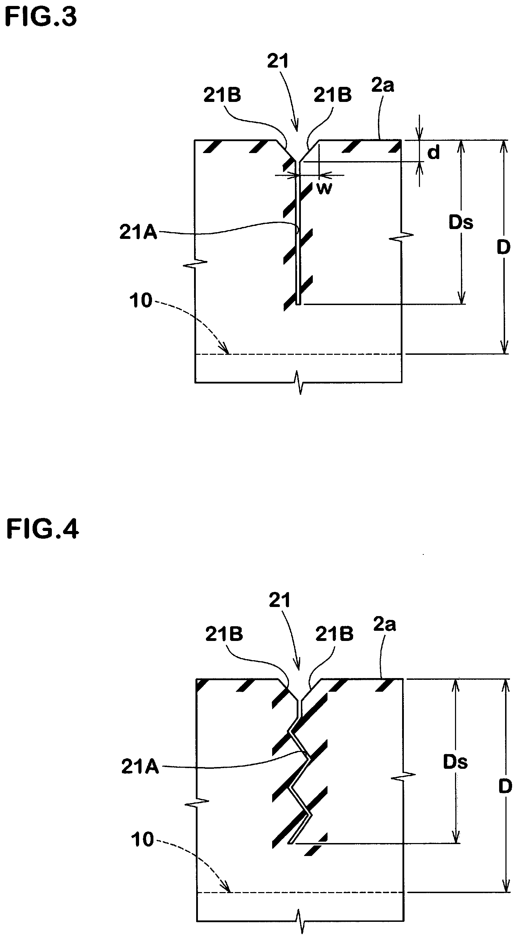

The groove widths of the circumferential grooves 10 and 11 are not particularly limited, but, in order to secure sufficient drainage performance and ground contacting area in a well-balanced manner, it is preferred that the groove widths are not less than 3 mm, more preferably not less than 4 mm, but not more than 12 mm, more preferably not more than 10 mm.
Further, it is preferred that the depths D (shown in FIG. 3) of the circumferential grooves 10 and 11 are not less than 5 mm, more preferably not less than 6 mm, but not more than 12 mm.
In the present embodiment of the invention, each of the circumferential grooves 10 and 11 is a straight groove whose groove edges extend in parallel with the tire circumferential direction. However, it is also possible that the circumferential grooves 10 and 11 are zigzag or wavy grooves or a combination of zigzag or wavy groove(s) and straight groove(s).

In the present embodiment of the invention, each of the shoulder land regions 20 is circumferentially divided into shoulder blocks 22 by a plurality of shoulder lateral-groove-like tread-pattern elements 21 which have a depth of not less than 50% of the depth D of the shoulder circumferential grooves 10.
The term "shoulder lateral-groove-like tread-pattern element" means a groove, a sipe, or a composite of a groove and a sipe which extends across the entire axial width of the shoulder land region 20.

In this specification, the term "sipe" means a narrow groove having a very small width inclusive of a cut having no substantial width.
Thus, when the tire 1 contacts with the ground (flat surface) under the normal tire load, and the sipe comes into the ground contacting patch as the tire rotates, the opposed sipe walls contact with each other (that is, if the sipe has a small opening in the tread surface, the opening is closed). For that purpose, it is preferred that the sipe has a width of not more than 1 mm.

In the present embodiment of the invention, each of the shoulder blocks 22 has an axially long shape whose aspect ratio is not more than 0.60, preferably not more than 0.40, wherein the aspect ratio is a ratio of a maximum dimension of the block measured in the tire circumferential direction between the block's extreme ends in the tire circumferential direction to
a maximum dimension of the block measured in the tire axial direction between the block's extreme ends in the tire axial direction.
Since such shoulder block 22 has a relatively small rigidity in the tire circumferential direction, it is effective in eliminating an impact from the road surface and improving the ride comfort performance.

At least one of the crown land regions 30, in the present embodiment, each of the first crown land regions 40 is provided with a plurality of crown lateral-groove-like tread-pattern elements 31 having a depth of not less than 50% of the depth D of the shoulder circumferential grooves 10, and thereby circumferentially divided into a plurality of crown blocks 32.

The term "crown lateral-groove-like tread-pattern element" means a groove, a sipe, or a composite of a groove and a sipe which extends across the entire axial width of the crown land region 30.

In the present embodiment of the invention, each of the crown blocks 32 has an aspect ratio larger than that of the shoulder blocks 22, wherein the aspect ratio is a ratio of a maximum dimension of the block measured in the tire circumferential direction between the block's extreme ends in the tire circumferential direction to
a maximum dimension of the block measured in the tire axial direction between the block's extreme ends in the tire axial direction.

The aspect ratio of each crown block 32 is preferably not less than 0.8, more preferably not less than 1.0.

Such crown block 32 is preferable in that it can compensate for the decrease in braking ability due to the rubber hardness of the tread rubber 2G because the rigidity in the tire circumferential direction of the crown block 32 becomes larger than that of the shoulder block.

The vibrations felt in a vehicle during running is caused by the vibrations of the tire generated when blocks come into contact with the road surface and transmitted to the inside of the vehicle via the tire sidewalls and the wheel rim. Therefore, the vibrations of the shoulder land regions 20 near the wheel rim via the tire sidewalls, greatly contribute to the vibrations felt in the vehicle.
On the other hand, in the ground contacting surface 2a of the tread portion 2, the ground contacting area and the ground contacting pressure of the crown land region 30 are larger than those of the shoulder land region 20. Therefore, the crown land region 30 contributes greatly to the braking force of the tire 1.

The present invention is based on the premise that the hardness of the tread rubber 2G is set to be less than 60 degrees, in order to suppress vibrations transmitted into the vehicle and thereby to ensure a comfortable ride, and then, the block rigidity distribution between the shoulder land region 20 and the crown land region 30 is improved in order to suppress the deterioration of braking performance.

Regarding the latter, specifically, when a value obtained by dividing the ground contacting area of one block by a maximum depth of the lateral-groove-like tread-pattern elements that divide the block, is taken as a block area per unit depth, the block area per unit depth of each of the shoulder blocks 22 is set to be smaller than the block area per unit depth of each of the crown blocks 32.

The block area per unit depth of a block correlates with the rigidity of the block, and when this value is larger, braking performance of each block becomes higher while impact mitigation ability is lowered.
In the present embodiment of the invention, paying attention to the respective functions of the shoulder block 22 and the crown block 32, the block area per unit depth of the shoulder block 22 is made smaller than the block area per unit depth of the crown block 32 in order to take advantage of the flexibility of the tread rubber 2G, and thereby, it becomes possible to improve the ride comfort performance while suppressing deterioration of the braking performance.

The block area per unit depth of the shoulder block 22 and that of the crown block 32 can be adjusted by appropriately changing the ground contacting area of each block and/or the depth of the lateral-groove-like tread-pattern element.

The block area per unit depth of the crown block 32 may be preferably set to be not less than 17 (sq.mm/mm), more preferably not less than 30 (sq.mm/mm), still more preferably not less than 40 (sq.mm/mm). Thereby, the block rigidity of the crown block 32 is increased, and the deterioration of the braking performance is further suppressed.

On the other hand, if the block area per unit depth of the crown block 32 becomes excessively large, then the improvement in the ride comfort performance due to the rubber hardness specified for the tread rubber 2G cannot be expected sufficiently.
From this point of view, the block area per unit depth of the crown block 32 may be preferably set to be not more than 80 (sq.mm/mm), more preferably not more than 75 (sq.mm/mm), still more preferably not more than 70 (sq.mm/mm).

The block area per unit depth of the shoulder block 22 may be preferably set to be not more than 60 (sq.mm/mm), more preferably not more than 55 (sq.mm/mm), still more preferably not more than 50 sq.mm/mm). Thereby, the block rigidity of the shoulder block 22 is optimized, so that the vibration relaxing/absorbing ability is further improved, and as a result, the ride comfort performance can be further improved.

On the other hand, if the block area per unit depth of the shoulder block 22 becomes excessively small, then there is a possibility that the braking performance is deteriorated even though the contribution ratio thereto is small.
From this point of view, the block area per unit depth of the shoulder block 22 may be preferably set to be not less than 20 (sq.mm/mm), more preferably not less than 25 (sq.mm/mm), still more preferably not less than 30 (sq.mm/mm).

Preferably, a ratio (As/Ac) of the block area per unit depth As (sq.mm/mm) of the shoulder block 22 to the block area per unit depth Ac (sq.mm/mm) of the crown block 32 may be set in a range from 0.21 to 0.88.

Preferably, the tire 1 of the present embodiment of the invention is configured as a non-studless tire (that is, a summer tire).
The studless tires are provided with an indication such as "STUDLESS" on its sidewall, but the non-studless tire of the present embodiment of the invention is not provided with such indication. The studless tire is provided with a large number of sipes in the tread portion 2 from the viewpoint of ensuring running performance on frozen road surfaces in winter season. In such studless tire, the block rigidity of both the crown blocks and the shoulder blocks is lowered, and the braking performance is lowered.
On the other hand, in the present embodiment of the invention, the number of sipes in the tread portion 2 is reduced, and thereby, the tire is formed as a non-studless tire, and sufficient braking performance can be ensured.

In order to further improve the ride comfort performance while suppressing the deterioration of the braking performance, it is desirable that the above-mentioned pair of shoulder circumferential grooves 10 are located within a region of 70% of the tread width TW centered on the tire equator C.

In the present specification, the "tread width" TW is the distance in the tire axial direction between the tread edges Te of the tread portion 2.

If the shoulder circumferential grooves 10 are located outside the region of 70% of the tread width TW, then the area of the crown land region 30 is increased, and the braking performance may be improved. But, as the input from the road surface is easily transmitted to the tread portion 2, the riding comfort performance may be deteriorated.

FIG. 3 is a sectional view taken along line III-III of FIG. 2.
As shown in FIG. 3, the shoulder lateral-groove-like tread-pattern element 21 in the present embodiment of the invention is configured as a shoulder sipe 21A.
Such shoulder sipe 21A is superior in the uniformity in the tire circumferential direction, of the rigidity of the shoulder land region 20 as compared to a lateral groove, and as a result, helps to suppress periodic vibrations generated in the shoulder land region 20 during running.

In this embodiment of the invention, the shoulder block 22 is divided by the shoulder sipes 21A. Therefore, in this embodiment of the invention, the maximum depth of the lateral-groove-like tread-pattern elements which divide the shoulder block 22 is the maximum depth Ds of the shoulder sipes 21A.
In the present embodiment of the invention, each of the shoulder sipes 21A has a constant depth Ds along the length thereof.

As shown in FIG. 3, the shoulder sipe 21A in the present embodiment of the invention has a depth Ds smaller than the depth D of the shoulder circumferential groove 10. Thereby, the braking performance can be ensured while reducing the rigidity of the shoulder land region 20, which greatly contributes to the ride comfort performance.
As another example of the shoulder sipe 21A, the depth Ds of the shoulder sipe 21A may be greater than or equal to the depth D of the shoulder circumferential groove 10.

In the shoulder sipe 21A in the present embodiment of the invention, as a preferable example, a chamfer 21B is formed on each side in the tire circumferential direction, of the opening of each shoulder sipe 21A.
The chamfer 21B extends from a sipe's side wall to the ground contacting surface 2a of the tread portion 2.
As another example, the chamfer 21B may be formed on only one side of the opening of each shoulder sipe 21A.

The width "w" and the depth "d" of the chamfer 21B are in a range from 2 to 5 mm.
Such chamfer 21B increases the ground contacting area of the shoulder block 22 by contacting with the ground when a shearing force in the tire circumferential direction acts on the shoulder block 22 during braking, and thus can exert a stable braking force.

Returning to FIG. 2, the shoulder sipe 21A in the present embodiment of the invention, as the shoulder lateral-groove-like tread-pattern element 21, extends in an arc shape in its top view.
Such shoulder sipe 21A helps to reduce the vibrations generated in the shoulder block 22 because the entire length of the sipe edge does not contact with the ground simultaneously during running.
FIG. 3 shows an example of the shoulder sipe 21A which extends straight inward in the tire radial direction.
FIG. 4 shows another example of the shoulder sipe 21A which extends inward in the tire radial direction in a zigzag or wavy manner.
Such three-dimensional shoulder sipe 21A can engage the adjacent shoulder blocks 22 with each other when a braking force acts on the shoulder land region 20, and thereby can suppress their collapse.
Therefore, the braking ability can be improved without increasing the rigidity of the shoulder block 22 it self, and the ride comfort performance and the braking performance can be further improved in a well-balanced manner.

Returning to FIG. 2, in the present embodiment of the invention, each of the shoulder blocks 22 is provided with one shoulder circumferential sipe 23 which axially divides the shoulder block 22 into two parts.
The shoulder circumferential sipe 23 extends at an angle of not more than 10 degrees with respect to the tire circumferential direction, for example.
The shoulder circumferential sipe 23 helps to relax the rigidity of the shoulder block 22 and increase the vibration absorbing ability of the shoulder block 22.

In the present embodiment of the invention, the depth of the shoulder circumferential sipe 23 is less than 50%, preferably not less than 30% of the depth of the shoulder circumferential groove.

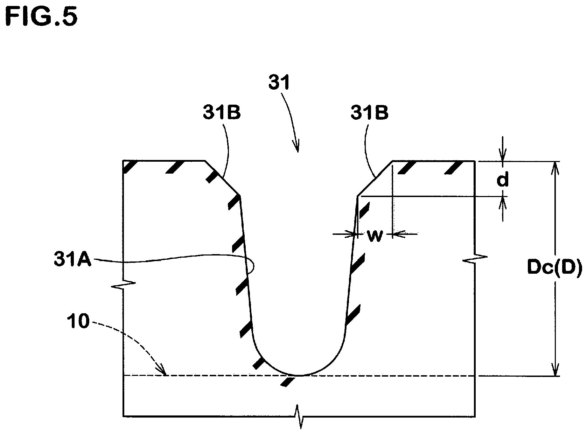

FIG. 5 is a sectional view taken along line V-V of FIG. 2.
As shown in FIG. 5, in the present embodiment of the invention, the crown lateral-groove-like tread-pattern element 31 is configured as a crown lateral groove 31A.
Such crown lateral groove 31A promotes a decrease in rigidity of the first crown land region 40 as compared to a sipe, and as a result, contributes to an improvement in ride comfort performance.

The crown lateral grooves 31A in the present embodiment of the invention as the crown lateral-groove-like tread-pattern elements 31, are arranged at pitches in the tire circumferential direction which are larger than pitches of the shoulder sipes 21A as the shoulder lateral-groove-like tread-pattern elements 21.
In this embodiment of the invention, the pitches of the crown lateral grooves 31A are twice the pitches of the shoulder sipes 21A. As a result, in the present embodiment of the invention, the ground contacting area of the crown block 32 is larger than the ground contacting area of the shoulder block 22.

In the present embodiment of the invention, the maximum depth of the crown lateral-groove-like tread-pattern elements 31 which divide the crown blocks 32 is the depth Dc of the crown lateral grooves 31A.
Further, the depth Dc of the crown lateral groove 31A in the present embodiment of the invention is set to be equal to or greater than the depth D of the shoulder circumferential groove 10. (FIG. 4 shows an example where Dc=D)
Thereby, the pair of first crown land regions 40 can contribute not only to the braking ability but also to the improvement of the ride comfort performance.

In the present embodiment of the invention, the crown lateral groove 31A has a constant depth Dc along the length thereof.

In the crown lateral groove 31A in the present embodiment of the invention, as a preferable example, a chamfer 31B is formed on each side in the tire circumferential direction, of the opening of the crown lateral groove 31A.
As another example, the chamfer 31B may be formed on only one side of the opening of each crown lateral groove 31A.
The chamfer 31B extends from a groove's side wall to the ground contacting surface 2a of the tread portion 2.
The width "w" and the depth "d" of the chamfer 31B are preferably not less than 1.5 mm, more preferably in a range from 2 to 5 mm.
Such chamfer 31B increases the ground contacting area of the crown block 32 by contacting with the ground when a shearing force in the tire circumferential direction acts on the crown blocks 32 during braking, and thus can exert a stable braking force.

As shown in FIG. 2, the crown lateral groove 31A in the present embodiment of the invention extends in an arc shape in its top view.
Such crown lateral groove 31A helps to reduce vibration generated in the crown block 32 because the entire length of the lateral groove edge does not contacting with the ground simultaneously during running.

Each of the crown blocks 32 in the present embodiment of the invention is provided with one crown circumferential sipe 33 which axially divides the crown block 32 into two parts. The crown circumferential sipe 33 extends at an angle of not more than 10 degrees with respect to the tire circumferential direction, for example. The crown circumferential sipe 33 helps to relax the rigidity of the crown block 32 and increase the vibration absorbing ability of the crown block 32.

In the present embodiment of the invention, the second crown land region 50 is not completely divided in the tire circumferential direction into blocks. That is, the second crown land region 50 is configured as a circumferentially continuous rib.
The second crown land region 50 in the present embodiment of the invention is provided with second crown sipes 51 and a second crown circumferential sipe 52.

The second crown circumferential sipe 52 extends continuously in the tire circumferential direction. Preferably, the second crown circumferential sipe 52 is disposed at the center in the tire axial direction, of the second crown land region 50.

The second crown sipes 51 extend inwardly in the tire axial direction from the crown circumferential grooves 11 and terminate within the second crown land region 50.
Further, the second crown sipes 51 extend to the second crown circumferential sipe 52 and terminate thereat.
In the present embodiment of the invention, the second crown sipes 51 on both sides of the second crown circumferential sipe 52 are arranged in a staggered manner in the tire circumferential direction.

The cross-sectional shape of the second crown sipe 51 is the same as the cross-sectional shape of the shoulder sipe 21A shown in FIG. 3, and chamfers 51B are provided.
Such second crown sipe 51 reduces the rigidity of the second crown land region 50. Further, at the time of braking, the chamfers 51B of the second crown sipes 51 come into contact with the ground, thereby increasing the contact area of the second crown land region 50, which helps to increase the braking force.

In the present embodiment of the invention, the depths of the second crown sipes 51 and the second crown circumferential sipe 52 are less than 50%, preferably in a range from 30% to 50% of the depth of the shoulder circumferential grooves 10.

While detailed description has been made of preferable embodiments of the present invention, the present invention can be embodied in various forms within the scope of the appended claims.

### Comparison tests

Based on the tread pattern shown in FIG. 2, pneumatic tires (non-studless tires) of size 235/60R17C having the internal structure shown in FIG. 1 were experimentally manufactured as test tires (Working example tires Ex.1-Ex.6 and comparative example tire Ref.) and tested for the ride comfort and braking performance.
Specifications of the test tires are shown in Table 1.

### < Ride comfort test >

The test tires were mounted on the front wheels and rear wheels of a car (minivan) (rims size 17x6.0J, tire pressure 525 kPa) and a test driver evaluated the ride comfort during running on a dry paved road surface.
The results are indicated in Table 1 by an index, wherein the larger the number, the better the ride comfort.

### < Brake performance test >

When the test car was running at a speed of 50 km/h on the dry paved road surface, the test driver braked the test car suddenly, and the braking distance was measured.
The results are indicated in Table 1 by an index, wherein the larger the number, the better the brake performance.

**Table 1**

| tire | Ref. | Ex.1 | Ex.2 | Ex.3 | Ex.4 | Ex.5 | Ex.6 |
|---|---|---|---|---|---|---|---|
| ground contacting area of crown block(sq.mm) | 440 | 600 | 560 | 640 | 630 | 600 | 715 |
| maximum depth of crown lateral-groove-like tread-pattern element (mm) | 8 | 10 | 7 | 8 | 9 | 10 | 13 |
| block area per unit depth Ac of crown block (sq.mm/mm) | 55 | 60 | 80 | 80 | 70 | 60 | 55 |
| ground contacting area of shoulder block (sq.mm) | 360 | 160 | 102 | 240 | 385 | 416 | 150 |
| maximum depth of shoulder lateral-groove-like tread-pattern element (mm) | 6 | 8 | 6 | 8 | 7 | 8 | 10 |
| block area per unit depth As of shoulder block (sq.mm/mm) | 60 | 20 | 17 | 30 | 55 | 52 | 15 |
| ratio(As/Ac) | 1.09 | 0.33 | 0.21 | 0.38 | 0.79 | 0.87 | 0.27 |
| tread rubber hardness (degree) | 60 | 55 | 50 | 40 | 40 | 50 | 59 |
| ride comfort | 50 | 80 | 60 | 55 | 50 | 65 | 80 |
| brake performance | 50 | 80 | 60 | 70 | 75 | 70 | 65 |

From the test results, it was confirmed that the tires according to the present invention were improved in the ride comfort while suppressing the deterioration of the braking performance as compared with the comparative example tire.

### DESCRIPTION OF THE REFERENCE SIGNS

- 1: tire
- 2: tread portion
- 2g: tread rubber
- 2a: ground contacting surface
- 10: shoulder circumferential groove
- 20: shoulder land portion
- 21: shoulder lateral-groove-like tread-pattern element
- 21a: shoulder sipe
- 22: shoulder block
- 30: crown land portion
- 31: crown lateral-groove-like tread-pattern element
- 31a: crown lateral groove
- 31b: chamfer
- 32: crown block

## Claims

1. A pneumatic tire (1) comprising a tread portion (2) comprising a tread rubber (2G) having a rubber hardness of less than 60 degrees, wherein the rubber hardness is measured at 23 degrees C in accordance with the Japanese Industrial Standard (JIS) K 6253, and wherein
the tread portion (2) comprises:
a pair of shoulder circumferential grooves (10) extending in the tire circumferential direction;
a pair of shoulder land portions (20) defined as being located axially outside the respective shoulder circumferential grooves (10); and
one or more crown land portions (30) defined as being located between the shoulder circumferential grooves (10),
each of the shoulder land portions (20) is circumferentially divided into a plurality of shoulder blocks (22) by a plurality of shoulder lateral-groove-like tread-pattern elements (21) having a depth of not less than 50% of the depths of the shoulder circumferential grooves (10), and
at least one of the crown land regions (30) is circumferentially divided into a plurality of crown blocks (32) by a plurality of crown lateral-groove-like tread-pattern elements (31) having a depth of not less than 50% of the depths of the shoulder circumferential grooves (10),
wherein a shoulder lateral-groove-like tread-pattern element (21) is a groove, a sipe, or a composite of a groove and a sipe which extends across the entire axial width of the shoulder land region (20) and a crown lateral-groove-like tread-pattern element (31) is a groove, a sipe, or a composite of a groove and a sipe which extends across the entire axial width of the crown land region (30), and wherein
when a block area per unit depth of a block is defined as a ground contact area of the block divided by a maximum depth of lateral-groove-like tread-pattern elements which divide the block, the block area per unit depth (As) of each of the shoulder blocks (20) is smaller than the block area per unit depth (Ac) of each of the crown blocks (30), wherein the maximum depth of lateral-groove-like tread-pattern elements is measured under a normal state of the tire (1) in which the tire (1) is mounted on a regular rim and is inflated to a normal internal pressure and loaded with no tire load, and the ground contact area of the block is measured when the tire (1) under the normal state is contacted with a flat horizontal surface at a camber angle of zero degree and loaded with the normal tire load,
**characterized in that**
the shoulder lateral-groove-like tread-pattern (21) elements are chamfered, wherein the width (w) and the depth (d) of the chamfer (21B) of the shoulder lateral-groove-like tread-pattern elements (21) are in a range from 2 to 5 mm.

2. The pneumatic tire (1) according to claim 1, wherein
the block area per unit depth (Ac) of each of the crown blocks (32) is in the range of 17 to 80 (sq.mm/mm).

3. The pneumatic tire (1) according to claim 1 or 2, which is a non-studless tire, that is, a summer tire.

4. The pneumatic tire (1) according to any one of claims 1 to 3, wherein
the shoulder circumferential grooves (10) are located within a region which has a width of 70% of the tread width (TW) and is centered on the tire equator (C).

5. The pneumatic tire (1) according to any one of claims 1 to 4, wherein the crown lateral-groove-like tread-pattern elements (31) are chamfered.

6. The pneumatic tire (1) according to any one of claims 1 to 5, wherein
the shoulder lateral-groove-like tread-pattern elements (21) have a depth smaller than the depth of the shoulder circumferential grooves (10).

7. The pneumatic tire (1) according to any one of claims 1 to 6, wherein
The crown lateral-groove-like tread-pattern elements (31) have a depth smaller than the depth of the shoulder circumferential grooves (10).

8. The pneumatic tire (10) according to any one of claims 1 to 5, wherein
the shoulder lateral-groove-like tread-pattern elements (21) have a depth equal to or greater than the depth of the shoulder circumferential grooves (10).

9. The pneumatic tire (1) according to any one of claims 1 to 6, wherein
the crown lateral-groove-like tread-pattern elements (31) have a depth equal to or greater than the depth of the shoulder circumferential grooves (10).

10. The pneumatic tire (1) according to any one of claims 1 to 9, wherein
the shoulder lateral-groove-like tread-pattern element (21) is a shoulder sipe, and the crown lateral-groove-like tread-pattern element (31) is a crown lateral groove.

## Patentansprüche

1. Luftreifen (1), umfassend einen Laufflächenabschnitt (2), der einen Laufflächengummi (2G) mit einer Gummihärte von weniger als 60 Grad umfasst, wobei die Gummihärte bei 23 Grad C gemäß der japanischen Industrienorm (JIS) K 6253 gemessen ist, und wobei
der Laufflächenabschnitt (2) umfasst:
ein Paar Schulterumfangsrillen (10), die sich in der Reifenumfangsrichtung erstrecken;
ein Paar Schulterlandabschnitte (20), die so definiert sind, dass sie sich axial außen von den jeweiligen Schulterumfangsrillen (10) befinden; und
einen oder mehrere Kronenlandabschnitte (30), die so definiert sind, dass sie sich zwischen den Schulterumfangsrillen (10) befinden,
wobei jeder der Schulterlandabschnitte (20) in Umfangsrichtung durch eine Vielzahl schulterquerrillenartiger Laufflächenprofilelemente (21) mit einer Tiefe von nicht weniger als 50 % der Tiefen der Schulterumfangsrillen (10) in eine Vielzahl von Schulterblöcken (22) unterteilt ist, und
mindestens einer der Kronenlandbereiche (30) in Umfangsrichtung durch eine Vielzahl kronenquerrillenartiger Laufflächenprofilelemente (31) mit einer Tiefe von nicht weniger als 50 % der Tiefen der Schulterumfangsrillen (10) in eine Vielzahl von Kronenblöcken (32) unterteilt ist,
wobei ein schulterquerrillenartiges Laufflächenprofilelement (21) eine Rille, ein Feineinschnitt oder ein Verbund aus einer Rille und einem Feineinschnitt ist, die/der sich über die gesamte axiale Breite des Schulterlandbereichs (20) erstreckt, und ein kronenquerrillenartiges Laufflächenprofilelement (31) eine Rille, ein Feineinschnitt oder ein Verbund aus einer Rille und einem Feineinschnitt ist, die/der sich über die gesamte axiale Breite des Kronenlandbereichs (30) erstreckt, und wobei
wenn eine Blockfläche pro Tiefeneinheit eines Blocks als eine Bodenkontaktfläche des Blocks dividiert durch eine maximale Tiefe von querrillenartigen Laufflächenprofilelementen, die den Block unterteilen, definiert ist, die Blockfläche pro Tiefeneinheit (As) jedes der Schulterblöcke (20) kleiner als die Blockfläche pro Tiefeneinheit (Ac) jedes der Kronenblöcke (30) ist, wobei die maximale Tiefe von querrillenartigen Laufflächenprofilelementen unter einem Normalzustand des Reifens (1) gemessen ist, in dem der Reifen (1) auf eine reguläre Felge aufgezogen und auf einen normalen Innendruck aufgepumpt und ohne Reifenlast belastet ist, und die Bodenkontaktfläche des Blocks gemessen ist, wenn der Reifen (1) unter dem Normalzustand mit einer flachen horizontalen Oberfläche bei einem Sturzwinkel von null Grad in Kontakt gebracht und mit der normalen Reifenlast belastet ist,
**dadurch gekennzeichnet, dass**
die schulterquerrillenartigen Laufflächenprofilelemente (21) abgeschrägt sind, wobei die Breite (w) und die Tiefe (d) der Abschrägung (21B) der schulterquerrillenartigen Laufflächenprofilelemente (21) in einem Bereich von 2 bis 5 mm liegen.

2. Luftreifen (1) nach Anspruch 1, wobei die Blockfläche pro Tiefeneinheit (Ac) jedes der Kronenblöcke (32) im Bereich von 17 bis 80 (mm²/mm) liegt.

3. Luftreifen (1) nach Anspruch 1 oder 2, der ein nicht-spikeloser Reifen ist, das heißt, ein Sommerreifen.

4. Luftreifen (1) nach einem der Ansprüche 1 bis 3, wobei die Schulterumfangsrillen (10) sich innerhalb eines Bereichs befinden, der eine Breite von 70 % der Laufflächenbreite (TW) aufweist und auf dem Reifenäquator (C) zentriert ist.

5. Luftreifen (1) nach einem der Ansprüche 1 bis 4, wobei die kronenquerrillenartigen Laufflächenprofilelemente (31) abgeschrägt sind.

6. Luftreifen (1) nach einem der Ansprüche 1 bis 5, wobei die schulterquerrillenartigen Laufflächenprofilelemente (21) eine Tiefe aufweisen, die kleiner als die Tiefe der Schulterumfangsrillen (10) ist.

7. Luftreifen (1) nach einem der Ansprüche 1 bis 6, wobei die kronenquerrillenartigen Laufflächenprofilelemente (31) eine Tiefe aufweisen, die kleiner als die Tiefe der Schulterumfangsrillen (10) ist.

8. Luftreifen (10) nach einem der Ansprüche 1 bis 5, wobei die schulterquerrillenartigen Laufflächenprofilelemente (21) eine Tiefe aufweisen, die gleich oder größer als die Tiefe der Schulterumfangsrillen (10) ist.

9. Luftreifen (1) nach einem der Ansprüche 1 bis 6, wobei die kronenquerrillenartigen Laufflächenprofilelemente (31) eine Tiefe aufweisen, die gleich oder größer als die Tiefe der Schulterumfangsrillen (10) ist.

10. Luftreifen (1) nach einem der Ansprüche 1 bis 9, wobei das schulterquerrillenartige Laufflächenprofilelement (21) ein Schulterfeineinschnitt ist und das kronenquerrillenartige Laufflächenprofilelement (31) eine Kronenquerrille ist.

## Revendications

1. Bandage pneumatique (1) comprenant une portion formant bande de roulement (2) comprenant un caoutchouc de bande de roulement (2G) ayant une dureté de caoutchouc inférieure à 60 degrés, la dureté de caoutchouc étant mesurée à 23 degrés C selon la norme industrielle japonaise (JIS) K 6253, et dans lequel
la portion formant bande de roulement (2) comprend :
une paire de rainures circonférentielles d'épaulement (10) s'étendant dans la direction circonférentielle du pneumatique ;
une paire de portions en relief d'épaulement (20) définies comme étant situées axialement à l'extérieur des rainures circonférentielles d'épaulement respectives (10) ; et
une ou plusieurs portions en relief de couronne (30) définies comme étant situées entre les rainures circonférentielles d'épaulement (10),
chacune des portions en relief d'épaulement (20) est divisée circonférentiellement en une pluralité de blocs d'épaulement (22) par une pluralité d'éléments formant motifs de bande de roulement similaires à des rainures latérales d'épaulement (21) ayant une profondeur qui n'est pas inférieure à 50 % des profondeurs des rainures circonférentielles d'épaulement (10), et
l'une au moins des régions en relief de couronne (30) est divisée circonférentiellement en une pluralité de blocs de couronne (32) par une pluralité d'éléments formant motifs de bande de roulement similaires à des rainures latérales de couronne (31) ayant une profondeur qui n'est pas inférieure à 50 % des profondeurs des rainures circonférentielles d'épaulement (10),
dans lequel un élément formant motif de bande de roulement similaire à une rainure latérale d'épaulement (21) est une rainure, une fente, ou un élément composite constitué d'une rainure et d'une fente qui s'étend à travers la largeur axiale entière de la région en relief d'épaulement (20) et un élément formant motif de bande de roulement similaire à une rainure latérale de couronne (31) est une rainure, une fente, ou un élément composite constitué d'une rainure et d'une fente qui s'étend à travers la largeur axiale entière de la région en relief de couronne (30), et dans lequel
quand une aire de bloc par profondeur unitaire d'un bloc est définie comme une aire de contact au sol du bloc divisée par une profondeur maximum d'éléments formant motifs de bande de roulement similaires à des rainures latérales qui divisent le bloc, l'aire de bloc par profondeur unitaire (As) de chacun des blocs d'épaulement (20) est plus petite que l'aire de bloc par profondeur unitaire (Ac) de chacun des blocs de couronne (30), la profondeur maximum d'éléments formant motifs de bande de roulement similaires à des rainures latérales étant mesurée dans un état normal du pneumatique (1) dans lequel le pneumatique (1) est monté sur une jante ordinaire et est gonflé à une pression interne normale et n'est chargé d'aucune charge de pneumatique, et l'aire de contact au sol du bloc est mesurée quand le pneumatique (1) dans l'état normal est mis en contact avec une surface horizontale plate sous un angle de cambrure de zéro degré et est chargé avec la charge de pneumatique normale,
**caractérisé en ce que**
les éléments formant motifs de bande de roulement similaires à des rainures latérales d'épaulement (21) sont chanfreinés, la largeur (w) et la profondeur (d) du chanfrein (21B) des éléments formant motifs de bande de roulement similaires à des rainures latérales d'épaulement (21) étant dans une plage allant de 2 à 5 mm.

2. Bandage pneumatique (1) selon la revendication 1, dans lequel l'aire de bloc par profondeur unitaire (Ac) de chacun des blocs de couronne (32) est dans la plage de 17 à 80 (mm²/mm).

3. Bandage pneumatique (1) selon la revendication 1 ou 2, qui est un pneumatique pas-sans-clous, c'est-à-dire, un pneumatique d'été.

4. Bandage pneumatique (1) selon l'une quelconque des revendications 1 à 3, dans lequel
les rainures circonférentielles d'épaulement (10) sont situées à l'intérieur d'une région qui a une largeur de 70 % de la largeur de bande de roulement (TW) et qui est centrée sur l'équateur de pneumatique (C).

5. Bandage pneumatique (1) selon l'une quelconque des revendications 1 à 4, dans lequel
les éléments formant motifs de bande de roulement similaires à des rainures latérales de couronne (31) sont chanfreinés.

6. Bandage pneumatique (1) selon l'une quelconque des revendications 1 à 5, dans lequel
les éléments formant motifs de bande de roulement similaires à des rainures latérales d'épaulement (21) ont une profondeur plus petite que la profondeur des rainures circonférentielles d'épaulement (10).

7. Bandage pneumatique (1) selon l'une quelconque des revendications 1 à 6, dans lequel
les éléments formant motifs de bande de roulement similaires à des rainures latérales de couronne (31) ont une profondeur plus petite que la profondeur des rainures circonférentielles d'épaulement (10).

8. Bandage pneumatique (10) selon l'une quelconque des revendications 1 à 5, dans lequel
les éléments formant motifs de bande de roulement similaires à des rainures latérales d'épaulement (21) ont une profondeur égale ou supérieure à la profondeur des rainures circonférentielles d'épaulement (10).

9. Bandage pneumatique (1) selon l'une quelconque des revendications 1 à 6, dans lequel
les éléments formant motifs de bande de roulement similaires à des rainures latérales de couronne (31) ont une profondeur égale ou supérieure à la profondeur des rainures circonférentielles d'épaulement (10).

10. Bandage pneumatique (1) selon l'une quelconque des revendications 1 à 9, dans lequel
l'élément formant motif de bande de roulement similaire à une rainure latérale d'épaulement (21) est une fente d'épaulement, et l'élément formant motif de bande de roulement similaire à une rainure latérale de couronne (31 ) est une rainure latérale de couronne.
